# EUROPEAN PATENT SPECIFICATION

(11) **EP 1 648 096 B1**
(45) Date of publication and mention of the grant of the patent: **15.07.2009**
(21) Application number: 05255565.3
(22) Date of filing: 10.09.2005
(51) Int. Cl.: H04B 3/54

(54) **Electrical control systems**
Elektrische Steuereinrichtung
Système de commande électrique

(30) Priority: 15.10.2004 GB 0422951
(43) Date of publication of application: 19.04.2006
(73) Proprietor: ROLLS-ROYCE PLC, London, SW1E 6AT (GB)
(72) Inventor: Regunath, Shane, Millsands, Sheffield S3 8NE (GB)
(74) Representative: Gunn, Michael Alan

(56) References cited:
- EP-A- 1 383 249
- GB-A- 2 410 481
- US-B1- 6 420 979

## Description

The present invention relates to control systems for a transport device and in particular a system for data transmission over a power bus for an engine, preferably a gas turbine engine.

Gas turbine engines are commonly used to provide thrust and power for transport devices such as aeroplanes and ships. These engines are complex and have many mechanically driven pumps, generators and hydraulically driven actuators. Many linkages and connecting parts are provided to operate these components. These linkages and connecting parts are also mechanical and add to the overall weight of the engine and can restrict the locations at which the components may be located.

The engines are mounted onto the transport device and are carried with it. The weight of the engine, therefore, has a bearing on the efficiency of the transport device. It is desirable to reduce the weight of the engine to improve efficiency. Reduced efficiency affects both the profitability of the transport device and can also have a detrimental effect on the environment.

One solution to reduce weight is to replace a number of the mechanically driven components with electrically driven components. For example, mechanically driven fuel pumps and hydraulically driven actuators will be replaced by electrically driven fuel pumps and electrically driven actuators respectively. The move to electrically driven components provides simpler engine arrangements and additionally components can be placed in suitable areas with less restriction.

The electrical driven components are controlled by an Electrical Engine Controller (EEC), which contains all the necessary control circuitry for each electrically driven component. Power is supplied to the component from the EEC. The circuitry within the EEC can be very complex and expensive due to the number of components that require controlling.

One improvement to the above system is to introduce distributed control. Each or a group of electrical components are controlled by a Smart Unit, or a Sub Engine Electrical Controller. The Smart Units control the operation of the electrically driven component. Both data and power is supplied to the component through the Smart Unit. Data and power is supplied to the Smart Unit from the Electrical Engine Controller. Data is supplied via a data bus and power via a separate power bus. The EEC is supplied with the power necessary to run its own systems and support all the components from a power source, such as a battery pack, alternator, or, in the case of a ship or aeroplane, the gas turbine engine.

EP 1383249 describes a method of data transmission over a power bus using an apparatus consisting of a plurality of modems which transmit data, a processor coupled to each modem and devices for receiving and transmitting data. Data is transmissible between the addressable processors without requiring transmission through a master controller.

In US 6420979 a method and apparatus for compressing and decompressing image signals is taught. A high speed transformation is achieved by using fixed coefficients in odd numbered positions as fixed coefficients used in both discrete cosine and inverse discrete cosine transformations.

The engine is a critical component of any transport device and, in an aeroplane, for example, a failure of any one system or component could be catastrophic. Most units will, therefore, require both a redundant power bus and a redundant data bus in case there is a disruption to one of the power or data buses. The requirement to provide redundant power and data buses for each smart unit or sub-engine controller adds significant weight to the engine, increases the complexity of the assembly and makes the maintenance more difficult. It will be appreciated that there may be four or more cables leading to each Smart Unit: at least a first and second data bus cable and at least a first and second power cable. Each cable must be placed into a harness that meets stringent aeronautical standards and is consequently relatively heavy - this can add significantly to the overall weight of the engine.

Therefore it is an object of the present invention to seek to provide an improved control system for a transport device.

It is a further object of the present invention to seek to provide a control and power distribution having reduced weight.

According to a first aspect of the present invention there is provided a control system for a transport device, said system comprising a power source; a master controller; at least one electrically driven component; a first combined power and data bus connecting the master controller with said at least one electrically driven component; wherein power for driving said at least one electrically driven component is provided from said power source via said first combined power and data bus; and wherein data for controlling said at least one electrically driven component is provided from said master controller via said first combined power and data bus; characterised in that the control system further compirises a second combined power and data bus connecting the master controller with said at least one electrically driven components; the control system further comprises circuitry for deterimining whether the supply of power or data by the first combined power and data-bus is interrupted; the control system further comprising switching means for switching the supply of power and data from the first combined power and data bus to the second combined power and data bus when interruption to the supply of power or data by the first combined power and data bus is determined by the circuitry.

Preferably power for driving said at least one electrically driven component is provided from said power source via said combined power and data bus and via said master controller.

The combined power and data bus may supply power to at least two electrically driven components.

The or each electrically driven component may be an electrically driven mechanical device. Preferably, the or each electrically driven mechanical device is a pump, valve, or actuator.

At least one of the electrically driven component or components may be a sub controller that provides data and /or power to other electrically driven components.

The electrically driven component may comprise communication circuitry for sending data back to said master controller via said bus.

Preferably the master controller comprises a scheduler that schedules a major time frame, which is subdivided into a plurality of minor time frames. Data may be provided from the master controller within a minor time frame, an electrically driven component being provided with reading circuitry that reads the data within the minor time frame.

A backup power and data bus may be provided between the master controller and the electrically driven component.

In accordance with a second aspect of the present invention there is provided a method of controlling an electrically driven component forming part of a transport device comprising the steps providing a master controller,providing an electrically driven component, providing a first combined power and data bus connecting said master controller and said electrically driven component, supplying power to said electrically driven component through said combined power and data bus scheduling a major time frame and plurality of minor time frames within said major time frame, allocating at least one minor time frame to said electrically driven component, and sending data to the electrically driven component through said combined power and data bus within the allocated minor time frame; characterised in that the control system is further provided with: a second combined power and data-bus; circuitry that determines whether supply of power and data from first combined power and data bus is interrupted; and a switching device that switches the supply of power and data to the electrically driven component from the back-up combined power and data bus if it is determined by the circuitry that the supply of power and data from first combined power and data bus is interrupted.

The electrically driven component may be provided with reading circuitry that reads data from the combined power and data bus at the allocated minor time frame.

The control system may also be provided with: a back-up combined power and data-bus, circuitry that determines whether supply of power and data from first combined power and data bus is interrupted, and a switching device that switches the supply of power and data to the electrically driven component from the back-up combined power and data bus if it is determined by the circuitry that the supply of power and data from first combined power and data bus is interrupted.

Further electrically driven components, one or more of which may be a sub controller, may be provided as part of the control system. The electrically driven components may be, for example, actuators, valves or pumps. The additional components may be directly connected to the master controller or via one or more of the other electrically driven components.

The transport device for any of the above aspects may be a vehicle capable of flight. The vehicle capable of flight may be an aeroplane or helicopter. The electrically driven component may be provided on the air frame or within the cabin or cockpit.

The transport device may be a marine vessel or a land vehicle.

The present invention will be more fully described by way of example only with reference to the accompanying drawings in which:
Figure 1 is a system diagram of a control system according to the present invention;
Figure 2 is a block circuit diagram of an Electrical Engine Controller according to the present invention;
Figure 3 is a block circuit diagram of an second embodiment of an Electrical Engine Controller according to the present invention;
Figure 4 depicts data packets sent out by the Electrical Engine Controller;
Figure 5 is a block circuit diagram of a Smart Unit for an electrically actuated mechanical device;
Figure 6 is a system diagram of a second embodiment of a control system according to the prior art;
Figure 7 is a system diagram of a third embodiment of a control system according to the prior art;
Figure 8 depicts a schematic of an engine having sub-engine controllers.

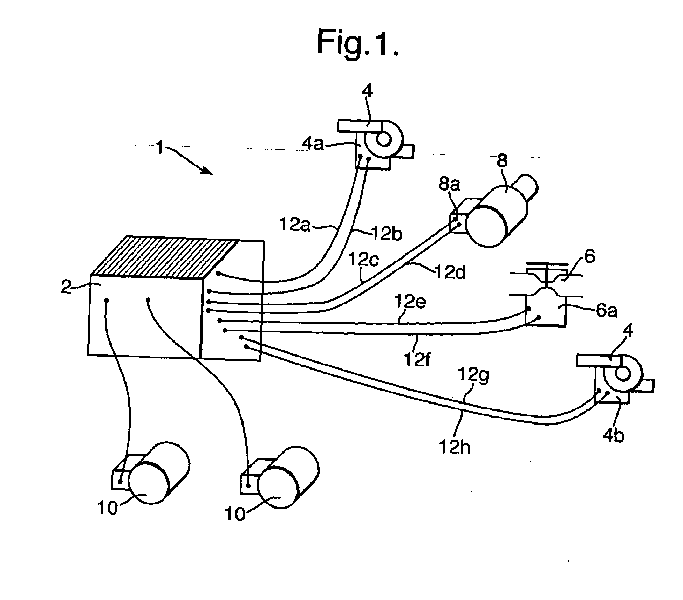

Figure 1 depicts a system configuration scheme according to a first embodiment of the present invention.

The example system comprises an Electrical Engine Controller (EEC) 2, pumps 4, a valve 6 and an actuator 8. Generators 10 provide power to the control system 1. A plurality of combined power and data buses 12a-12h are provided between the EEC 2 and the pumps 4, valve 6 and actuator 8. The pumps, valves and actuators will, for ease of description, hereafter be called electrically driven components.

Each of the components within the system will be briefly discussed in turn.

### The Generators 10

Aeroplanes are provided with power from either their on-board gas turbine engines or from an auxiliary gas turbine. Taking power from both engines of the plane, or an auxiliary gas turbine, provides an inherent redundancy for the power-generating component of the system.

As an alternative to using power generated from the gas turbine, it is possible to use battery power or other auxiliary systems.

### The Electrical Engine Controller 2

The Electrical Engine Controller issues commands and receives feedback from each of the Smart Units. The Controller provides power and data to first and second independent data and power buses. The method of data transmission and method of operating the system will be described in detail later in the specification.

### The Electrically Driven Components 4, 6, 8

Each of the electrically driven components is provided with a Smart Unit. The Smart Unit for each of the components acts as a single component sub-engine control unit. In this embodiment the driven components are pumps, actuators and valves. These are selected depending on their purpose in the engine and may be any appropriate conventionally used component. The smart units will be described in detail later in the specification.

### The Combined Power and Data Buses 12a to 12h

The combined power and data buses are cables that are adapted to transmit both power and data simultaneously. They connect the EEC with the smart units on the electrically driven components. For redundancy purposes, at least two combined power and data buses lead to the smart unit of each electrically driven component.

The power cables radiate to each of the electrically driven components from connections within the EEC.

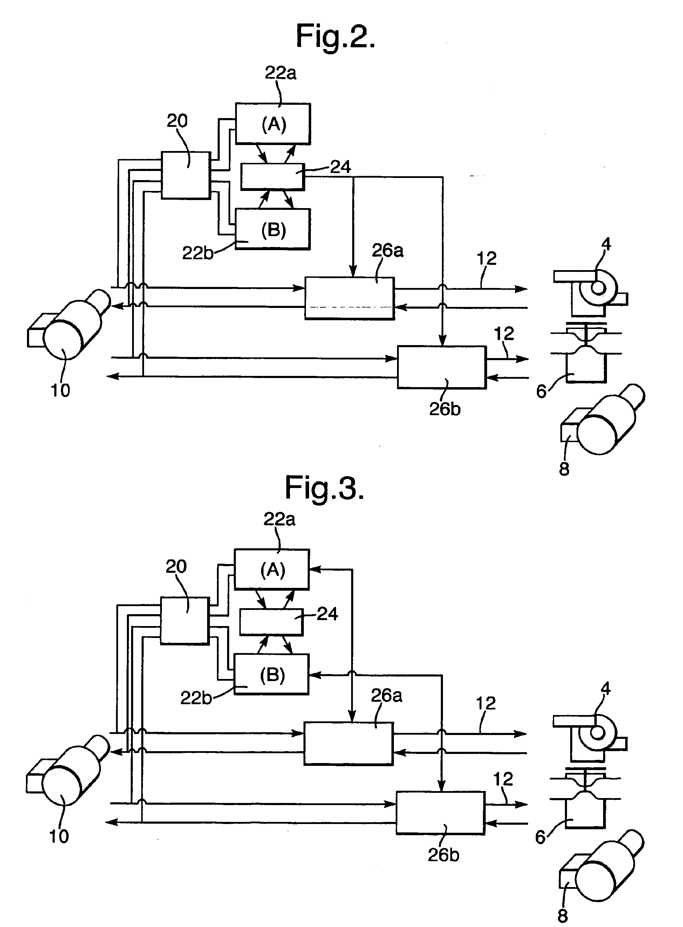

The EEC, will now be described in greater detail and with reference to Figure 2, the Electrical Engine Controller consists of a power selection switch 20, a first (A) EEC Channel 22a, a second (B) EEC Channel 22b, Inter Channel Communication means 24, First Channel communications circuitry 26a and Second Channel communications circuitry 26b.

In operation, the power selection switch 20 selects which of the power sources 10 is to provide power to the Electrical Engine Controller 2 and the components 4, 6, 8.

Both EEC channels A 22a and B 22b operate simultaneously to calculate data and a data selection switch located as part of the inter-channel communication 24 selects which of the data channels is to be used to supply the data to the components, along with the power. The data is supplied to the components through the first or second channel communication circuitry 26a, 26b.

Alternatively, as depicted in Figure 3, both power and data buses 12 may operate continually, a first combined power and data bus receiving power from a dedicated power source 10 and the data from a dedicated channel 22a and the second combined power and data bus receiving power from a same or a different dedicated power source and the data from a different dedicated channel 22b. The decision as to which combined power and data bus to use is made by the Smart Units. The power generators can be interchangeable between the power buses. The generators can have a smart unit that controls their operation.

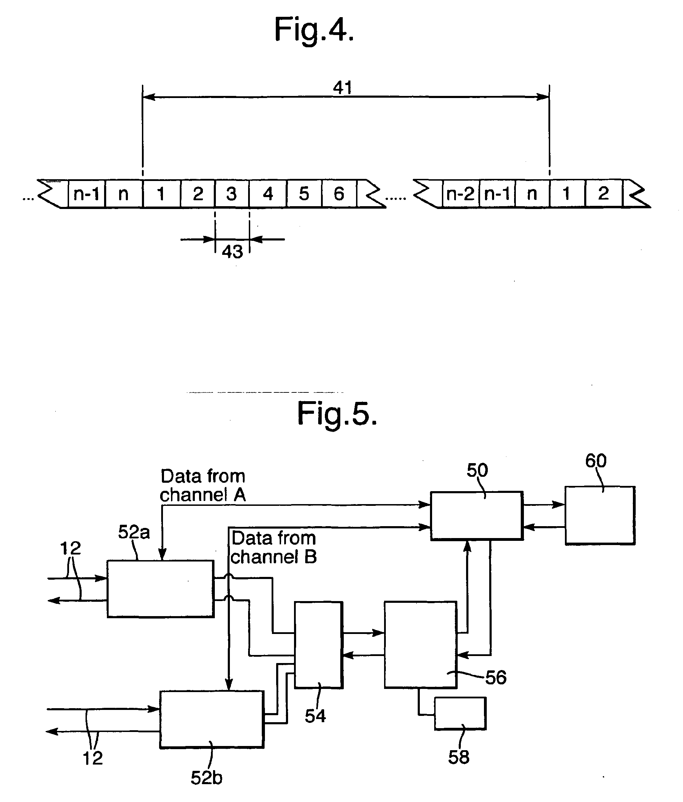

Figure 4 details the data transmission and receiving protocol scheme.

The Electrical Engine Controller is provided with a scheduler that determines the information that needs to be sent and received by the Electrical Engine Controller. The scheduler operates over a period of time, known as the major time frame 41.

The major time frame is divided into a number of equal length minor time frames 43, n in this embodiment, where n is an integer greater than 1. Each of the Smart Units are programmed to receive signals sent by the scheduler. Each smart unit is allocated specific minor time frames that contains data for that smart unit, the smart units being programmed to ignore any data in other minor time frames.

The Electrical Engine Controller transmits a synchronisation pulse that is unique and read by all the Smart Units. The synchronisation pulse enables the Smart Units to resynchronise their internal clocks and allows the units to communicate coherently and prevent time drift. The Smart Units may read the synchronisation pulse at every incidence, after m incidences or upon demand. m is an integer greater than 1.

The Smart Units are allocated at least one minor time frame to transmit data back to the Electrical Engine Controller.

The data may be transmitted by the power and data bus in two formats. In the first format, known as the Time Division Format, each Smart Unit is allocated specific minor time frame(s) to read and write information. At those specific instances the respective unit will either read information from the bus or write information to the bus. In the second format, known as Time and Code Division Format, each message transmitted from the Electrical Engine Controller contains a unique code or address. Only the Smart Unit(s) that is pre-programmed with the specific code will respond to the message. Time division is required to allow for the individual Smart Units to write messages back to the Electrical Engine Controller and the predefined time instances.

Figure 5 depicts the Smart Unit configuration, where control circuitry 50 in the smart unit determines which of the combined power and data buses 12 provide the data and power. It is possible for a first one of the combined power and data buses to be selected to provide just the power and for the second one of the combined power and data buses to be selected to provide just the data. Alternatively the data and power may be selected from the same power and data bus.

Power and data from bus A and bus B are fed to respective communications circuitry 52a and 52b. A power bus selection circuitry 54 selects from which power bus the power is to be taken. Preferably this is determined at system start-up, to reduce dormant faults, though it may be varied throughout system operation or upon detection of a fault with either of bus A or bus B. The circuitry of the Power Bus selection circuitry determining whether there is a fault in the supply of power from the selected power bus and switching to the alternate power bus if such a fault is identified.

A Transformer 56 is provided to ensure an appropriate current and voltage is passed to each component.

A battery backup 58 is provided to ensure that each Smart Unit can enter a fail safe mode in the event of failure to both buses i.e. before shutting down the system, valves can be provided with sufficient power to close or open to a safe position at a predefined rate and actuators to retract to a safe position.

Control circuitry 50 reads data from either Channel A or Channel B depending on the Databus selected at start-up or during operation. Alternatively, the circuitry reads data from both Channel A and Channel B and determines the best data to use. The electrical component 60, be it a motor, actuator, solenoid etc. is actuated based on this data.

The control circuitry may also feedback data to the Electrical Engine Controller via the power and databus. The data may include information such as the operating conditions of the component.

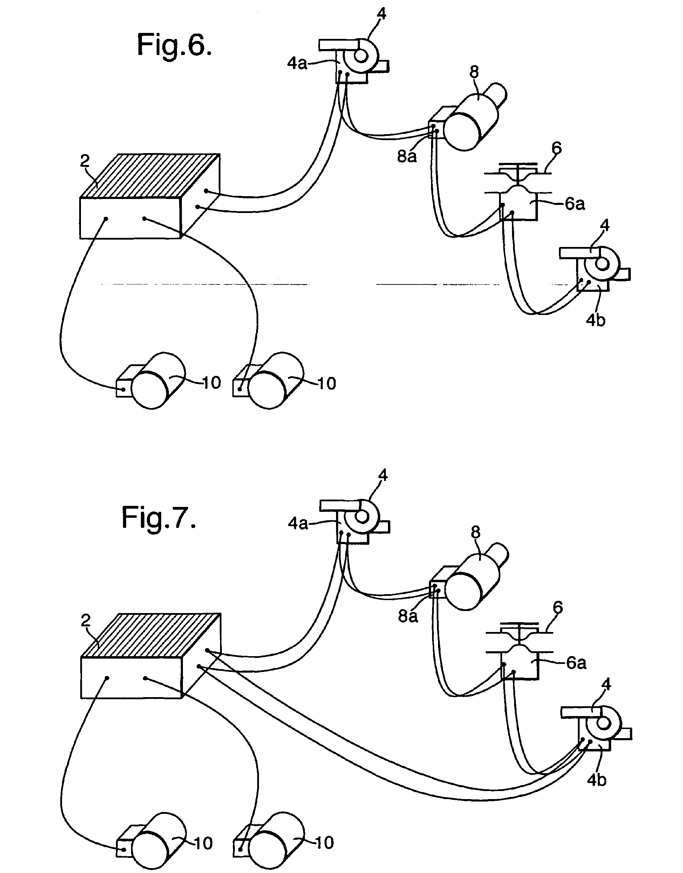

Figure 6 depicts a further circuit incorporating the present invention. In this embodiment the components are daisy chained together. This has the benefit of reducing the amount of cabling required, and the weight can be further reduced by using narrower bore cables towards the ends of the circuit furthest from the EEC.

It will be appreciated that with this circuit that damage to the electrical system of the Smart Unit 4a of pump 4 may result the remaining components in the circuit becoming similarly inoperative. As an alternative, a ring circuit may be provided as exemplified in Figure 7.

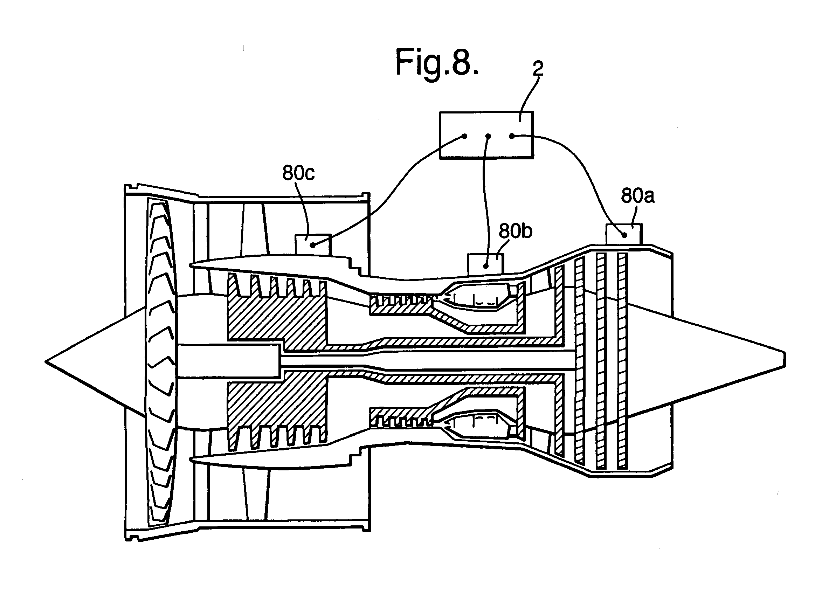

The invention is also of benefit where the electrically driven component is a sub-engine controller. As shown in figure 8, which is a schematic of a gas turbine engine, the electronic engine controller 2 can delegate control of components to sub-engine controllers 80a, 80b and 80c. These sub-engine controllers are governed by the EEC 2, but have individual responsibility for the components within their areas, in this embodiment the compression system, combustion system and turbine system respectively. The sub-engine controllers can feed back information on the status of the components or the sub-engine controller to the EEC.

It will be appreciated that other modifications may be made to the embodiments described herein without departing from the scope of the present invention. For example, each smart unit may follow the same process to decide which power and data bus to use. Alternatively, specific units may use different processes.

Similarly, fuses may be provided in each cable or electrically driven component to protect in case of current overload.

Also, the invention has application to other components of a transport device other than just those of the engine. Electrically driven components of an aeroplane forming part of, for example, the airframe or cabin may be controlled and supplied with power via a method and apparatus according to the present invention.

## Claims

1. A control system (1) for a transport device, said system comprising
a power source (10);
a master controller (2);
at least one electrically driven component (4, 6, 8);
a first combined power and data bus (12a, 12c, 12e, 12g) connecting the master controller (2) with said at least one electrically driven components (4, 6, 8);
wherein power for driving said at least one electrically driven component (4, 6, 8) is provided from said power source (10) via said first combined power and data bus (12a, 12c, 12e, 12g); and
wherein data for controlling said at least one electrically driven component (4, 6, 8) is provided from said master controller via said first combined power and data bus (12a, 12c, 12e, 12g);
**characterised in that** the control system (1) further compirises a second combined power and data bus (12b, 12d, 12f, 12h) connecting the master controller (2) with said at least one electrically driven component (4, 6, 8);
the control system further comprises circuitry (54) for deterimining whether the supply of power or data by the first combined power and data-bus is interrupted;
the control system further comprising switching means for switching the supply of power and data from the first combined power and data bus to the second combined power and data bus when interruption to the supply of power or data by the first combined power and data bus is determined by the circuitry.

2. A control system according to Claim 1, wherein said power for driving said at least one electrically driven component is provided from said power source (10) via said first combined power and data bus (12a, 12c, 12e, 12g) and via said master controller (2).

3. A control system according to Claim 1 or Claim 2, wherein the combined power and data bus supplies power to at least two electrically driven components.

4. A control system according to any preceding claim, wherein the or each electrically driven component is an electrically driven mechanical device.

5. A control system according to Claim 4, wherein the or each electrically driven mechanical device is a pump (4), valve (6), or actuator (8).

6. A control system according to any one of Claim 1 to Claim 3, wherein at least one of the electrically driven component or components is a sub controller (4a, 6a, 8a) adapted to provide data to an electrical driven mechanical device.

7. A control system according to Claim 6, wherein the electrically driven mechanical device is provided within an engine.

8. A control system according to any preceding claim, wherein the electrically driven component or components comprise communication circuitry for sending data back to said master controller via said first bus.

9. A control system according to any preceding claim, wherein said master controller further comprises a scheduler that schedules a major time frame (41) which is subdivided into a plurality of minor time frames (43).

10. A control system according to Claim 9, wherein data is provided from the master controller within a minor time frame, an electrically driven component being provided with reading circuitry that reads the data within the minor time frame.

11. A method of controlling an electrically driven component forming part of a transport device comprising the steps
providing a master controller (2),
providing an electrically driven component (4, 6, 8),
providing a first combined power and data bus (12a, 12c, 12e, 12g) connecting said master controller (2) and said electrically driven component (4, 6, 8),
supplying power to said electrically driven component through said combined power and data bus
scheduling a major time frame (41) and plurality of minor time frames (43) within said major time frame,
allocating at least one minor time frame to said electrically driven component, and
sending data to the electrically driven component through said combined power and data bus within the allocated minor time frame;
**characterised in that** the control system is further provided with:
a second combined power and data-bus (12b, 12d, 12f, 12h);
circuitry that determines whether supply of power data from first combined power and data bus is interrupted (54);
and a switching device that switches the supply of power and data to the electrically driven component from the back-up combined power and data bus if it is determined by the circuitry that the supply of power and data from first combined power and data bus is interrupted.

12. A method according to Claim 11, wherein the electrically driven component is provided with reading circuitry that reads data from the combined power and data bus at the allocated minor time frame.

13. A system or method according to any preceding claim, wherein the transport device is a vehicle capable of flight.

14. A system or method according to Claim 13, wherein the vehicle capable of flight is an aeroplane or helicopter.

15. A system or method according to Claim 14, wherein the electrical driven component is provided on the air frame.

16. A system or method according to Claim 14, wherein the electrical driven component is provided within the cabin or cockpit.

17. A system or method according to any one of claims 1 to 12, wherein the transport device is a marine vessel.

18. A system or method according to any one of claims 1 to 12, wherein the transport device is a land vehicle.

## Patentansprüche

1. Steuersystem (1) für ein Transportfahrzeug mit:
einer Stromquelle (10),
einer Hauptsteuereinrichtung (2),
wenigstens einem elektrisch angetriebenen Gerät (4, 6, 8),
einer ersten kombinierten Leistungs- und Datenbusleitung (12a, 12c, 12e, 12g), welche die Hauptsteuereinrichtung (2) mit dem wenigstens einen elektrisch angetriebenen Gerät (4, 6, 8) verbindet;
wobei die Leistung zum Antrieb des wenigstens einen elektrisch angetriebenen Gerätes (4, 6, 8) von der Stromquelle (10) über die erste kombinierte Leistungs- und Datenbusleitung (12a, 12c, 12e, 12g) geliefert wird; und
wobei die Daten zur Steuerung des wenigstens einen elektrisch angetriebenen Gerätes (4, 6, 8) von der Hauptsteuereinrichtung über die erste kombinierte Leistungs- und Datenbusleitung (12a, 12c, 12e, 12g) geliefert wird,
**dadurch gekennzeichnet, dass** das Steuersystem (1) weiter eine zweite kombinierte Leistungs- und Datenbusleitung (12b, 12d, 12f, 12h) aufweist, die die Hauptsteuereinrichtung (2) mit dem wenigstens einen elektrisch angetriebenen Gerät (4, 6, 8) verbindet;
dass das Steuersystem weiter eine Schaltung (54) aufweist, um festzustellen, ob die Zufuhr von Leistung oder Daten durch die erste kombinierte Leistungs- und Datenbusleitung unterbrochen ist;
und dass das Steuersystem weiter Schaltmittel aufweist, um die Zufuhr der Leistung und der Daten von der ersten kombinierten Leistungs- und Datenbusleitung auf die zweite kombinierte Leistungs- und Datenbusleitung umzuschalten, wenn eine Unterbrechung der Zufuhr von Leistung oder Daten über die erste kombinierte Leistungs- und Datenbusleitung durch die Schaltung festgestellt wird.

2. Steuersystem nach Anspruch 1, bei welchem die Leistung zum Antrieb des wenigstens einen elektrisch angetriebenen Gerätes von der Stromquelle (10) über die erste kombinierte Leistungs- und Datenbusleitung (12a, 12c, 12e, 12g) und über die Hauptsteuereinrichtung (2) geliefert wird.

3. Steuersystem nach Anspruch 1 oder 2, bei welchem die kombinierte Leistungs- und Datenbusleitung die Leistung nach wenigstens zwei elektrisch angetriebenen Geräten liefert.

4. Steuersystem nach einem der vorhergehenden Ansprüche, bei welchem das oder jedes elektrisch angetriebene Gerät eine elektrisch angetriebene mechanische Vorrichtung ist.

5. Steuersystem nach Anspruch 4, bei welchem das, die oder jede elektrisch angetriebene mechanische Vorrichtung eine Pumpe (4), ein Ventil (6) oder ein Antrieb (8) ist.

6. Steuersystem nach einem der Ansprüche 1 bis 3, bei welchem wenigstens eines der elektrisch angetriebenen Geräte eine Hilfssteuereinrichtung (4a, 6a, 8a) aufweist, welche Daten an eine elektrisch angetriebene mechanische Vorrichtung liefert.

7. Steuersystem nach Anspruch 6, bei welchem die elektrisch angetriebene mechanische Vorrichtung mit einem Motor ausgerüstet ist.

8. Steuersystem nach einem der vorhergehenden Ansprüche, bei welchem das elektrisch angetriebene Gerät oder die elektrisch angetriebenen Geräte eine Kommunikationsschaltung umfassen, um Daten über die erste Busleitung zurück nach der Hauptsteuereinrichtung zu senden.

9. Steuersystem nach einem der vorhergehenden Ansprüche, bei welchem die Hauptsteuereinrichtung ferner ein Steuerprogramm aufweist, das ein Hauptzeitfenster (41) festlegt, das in mehrere Nebenzeitfenster (43) unterteilt ist.

10. Steuersystem nach Anspruch 9, bei welchem Daten von der Hauptsteuereinrichtung innerhalb eines Nebenzeitfensters erzeugt werden und ein elektrisch angetriebenes Gerät mit einer Leseschaltung versehen ist, die die Daten aus dem Nebenzeitfenster ausliest.

11. Verfahren zur Steuerung eines elektrisch angetriebenen Gerätes, das einen Teil eines Transportfahrzeuges bildet, mit den folgenden Schritten:
es wird eine Hauptsteuereinrichtung (2) vorgesehen;
es wird ein elektrisch angetriebenes Gerät (4, 6, 8) vorgesehen;
es wird eine erste kombinierte Leistungs- und Datenbusleitung (12a, 12c, 12e, 12g) vorgesehen, die die Hauptsteuereinrichtung (2) mit dem elektrisch angetriebenen Gerät (4, 6, 8) verbindet;
es wird das elektrisch angetriebene Gerät über die kombinierte Leistungs- und Datenbusleitung mit Leistung versorgt;
es werden ein Hauptzeitfenster (41) und mehrere Nebenzeitfenster (43) innerhalb des Hauptzeitfensters berechnet;
es wird wenigstens ein Nebenzeitfenster dem elektrisch angetriebenen Gerät zugeordnet und
es werden Daten nach dem elektrisch angetriebenen Gerät über die kombinierte Leistungs- und Datenbusleitung innerhalb des zugeordneten berechneten Nebenzeitfensters geschickt;
**dadurch gekennzeichnet, dass** das Steuersystem außerdem ausgestattet ist mit:
einer zweiten kombinierten Leistungs- und Datenbusleitung;
einer Schaltung (54), die bestimmt, ob die Leistungszufuhr und die Datenzufuhr von der ersten kombinierten Leistungs- und Datenbusleitung unterbrochen ist;
einer Schaltvorrichtung, die die Zufuhr von Leistung und Daten nach dem elektrisch angetriebenen Gerät von der in Bereitschaftsstellung befindlichen kombinierten Leistungs- und Datenbusleitung umschaltet, wenn durch die Schaltung festgestellt wird, dass die Zufuhr von Leistung und Daten von der ersten kombinierten Leistungs- und Datenbusleitung unterbrochen ist.

12. Verfahren nach Anspruch 11, bei welchem das elektrisch angetriebene Gerät mit einer Leseschaltung versehen ist, die Daten von der kombinierten Leistungs- und Datenbusleitung an dem zugeordneten Nebenzeitfenster ausliest.

13. System oder Verfahren nach einem der vorhergehenden Ansprüche, bei welchem das Transportfahrzeug ein flugfähiges Fahrzeug ist.

14. System oder Verfahren nach Anspruch 13, bei welchem das flugfähige Fahrzeug ein Flugzeug oder ein Hubschrauber ist.

15. System oder Verfahren nach Anspruch 14, bei welchem das elektrisch angetriebene Gerät auf dem Luftfahrzeug angeordnet ist.

16. System oder Verfahren nach Anspruch 14, bei welchem das elektrisch angetriebene Gerät innerhalb der Kabine oder innerhalb des Cockpits angeordnet ist.

17. System oder Verfahren nach einem der Ansprüche 1 bis 12, bei welchem das Transportfahrzeug ein Wasserfahrzeug ist.

18. System oder Verfahren nach einem der Ansprüche 1 bis 12, bei welchem das Transportfahrzeug ein Landfahrzeug ist.

## Revendications

1. Système de commande (1) pour un dispositif de transport, ledit système comprenant :
une source de puissance (10) ;
un contrôleur maître (2) ;
au moins un composant commandé électriquement (4, 6, 8) ;
un premier bus de puissance et de données combinées (12a, 12c, 12e, 12g) connectant le contrôleur maître (2) audit au moins un composant commandé électriquement (4, 6, 8) ;
dans lequel la puissance pour commander ledit au moins un composant commandé électriquement (4, 6, 8) est fournie par ladite source de puissance (10) par l'intermédiaire dudit premier bus de puissance et de données combinées (12a, 12c, 12e, 12g) ; et
dans lequel les données pour commander ledit au moins un composant commandé électriquement (4, 6, 8) sont fournies par ledit contrôleur maître par l'intermédiaire dudit premier bus de puissance et de données combinées (12a, 12c, 12e, 12g) ;
**caractérisé en ce que** le système de commande (1) comprend en outre un deuxième bus de puissance et de données combinées (12b, 12d, 12f, 12h) connectant le contrôleur maître (2) audit au moins un composant commandé électriquement (4, 6, 8) ;
le système de commande comprend en outre des éléments de circuit (54) pour déterminer si la fourniture de puissance ou de données par le premier bus de puissance et de données combinées est interrompue ;
le système de commande comprenant en outre des moyens de commutation pour commuter la fourniture de puissance et de données du premier bus de puissance et de données combinées vers le deuxième bus de puissance et de données combinées lorsqu'une interruption de la fourniture de puissance ou de données par le premier bus de puissance et de données combinées est déterminée par les éléments de circuit.

2. Système de commande selon la revendication 1, dans lequel ladite puissance pour commander ledit au moins un composant commandé électriquement est fournie par ladite source de puissance (10) par l'intermédiaire dudit premier bus de puissance et de données combinées (12a, 12c, 12e, 12g) et par l'intermédiaire dudit contrôleur maître (2).

3. Système de commande selon la revendication 1 ou la revendication 2, dans lequel le bus de puissance et de données combinées alimente en puissance au moins deux composants commandés électriquement.

4. Système de commande selon l'une quelconque des revendications précédentes, dans lequel le ou chaque composant commandé électriquement est un dispositif mécanique commandé électriquement.

5. Système de commande selon la revendication 4, dans lequel le ou chaque dispositif mécanique commandé électriquement est une pompe (4), une vanne (6) ou un actionneur (8).

6. Système de commande selon l'une quelconque des revendications 1 à 3, dans lequel au moins l'un du ou des composants commandés électriquement est un sous-contrôleur (4a, 6a, 8a) adapté pour fournir des données à un dispositif mécanique commandé électriquement.

7. Système de commande selon la revendication 6, dans lequel le dispositif mécanique commandé électriquement est prévu dans un moteur.

8. Système de commande selon l'une quelconque des revendications précédentes, dans lequel le ou les composants commandés électriquement comprennent des éléments de circuit de communication pour renvoyer des données audit contrôleur maître par l'intermédiaire dudit premier bus.

9. Système de commande selon l'une quelconque des revendications précédentes, dans lequel ledit contrôleur maître comprend en outre un programmateur qui programme une trame temporelle principale (41) qui est subdivisée en une pluralité de trames temporelles secondaires (43).

10. Système de commande selon la revendication 9, dans lequel des données sont fournies par le contrôleur maître dans une trame temporelle secondaire, un composant commandé électriquement étant pourvu d'éléments de circuit de lecture qui lisent les données dans la trame temporelle secondaire.

11. Procédé de commande d'un composant commandé électriquement faisant partie d'un dispositif de transport comprenant les étapes consistant à :
fournir un contrôleur maître (2),
fournir un composant commandé électriquement (4, 6, 8),
fournir un premier bus de puissance et de données combinées (12a, 12c, 12e, 12g) connectant ledit contrôleur maître (2) et ledit composant commandé électriquement (4, 6, 8),
alimenter ledit composant commandé électriquement par l'intermédiaire dudit bus de puissance et de données combinées,
programmer une trame temporelle principale (41) et une pluralité de trames temporelles secondaires (43) dans ladite trame temporelle principale,
attribuer au moins une trame temporelle secondaire audit composant commandé électriquement, et
envoyer des données au composant commandé électriquement par l'intermédiaire dudit bus de puissance et de données combinées dans la trame temporelle secondaire attribuée ;
**caractérisé en ce que** le système de commande est en outre pourvu :
d'un deuxième bus de puissance et de données combinées (12b, 12d, 12f, 12h) ;
d'éléments de circuit qui déterminent si la fourniture de puissance et de données à partir du premier bus de puissance et de données combinées est interrompue (54) ;
et d'un dispositif de commutation qui commute la fourniture de puissance et de données au composant commandé électriquement vers le bus de puissance et de données combinées de secours s'il est déterminé par les éléments de circuit que la fourniture de puissance et de données par le premier bus de puissance et de données combinées est interrompue.

12. Procédé selon la revendication 11, dans lequel le composant commandé électriquement est pourvu d'éléments de circuit de lecture qui lisent les données provenant du bus de puissance et de données combinées dans la trame temporelle secondaire attribuée.

13. Système ou procédé selon l'une quelconque des revendications précédentes, dans lequel le dispositif de transport est un véhicule capable de voler.

14. Système ou procédé selon la revendication 13, dans lequel le véhicule capable de voler est un avion ou un hélicoptère.

15. Système ou procédé selon la revendication 14, dans lequel le composant commandé électriquement est prévu sur la structure d'avion.

16. Système ou procédé selon la revendication 14, dans lequel le composant commandé électriquement est prévu dans la cabine ou le poste de pilotage.

17. Système ou procédé selon l'une quelconque des revendications 1 à 12, dans lequel le dispositif de transport est un vaisseau maritime.

18. Système ou procédé selon l'une quelconque des revendications 1 à 12, dans lequel le dispositif de transport est un véhicule terrestre.
